# EUROPÄISCHE PATENTSCHRIFT

(11) **EP 2 701 891 B1**
(45) Veröffentlichungstag und Bekanntmachung des Hinweises auf die Patenterteilung: **21.10.2020**
(21) Anmeldenummer: 12720456.8
(22) Anmeldetag: 26.04.2012
(51) Int. Cl.: B29L 31/00, B29C 48/15, C08G 101/00, B29C 44/22, B29C 48/285

(54) **EXTRUDIERTE KUNSTSTOFFPROFILE, ENTHALTEND KONTINUIERLICH EINGEBRACHTE DÄMMELEMENTE**
EXTRUDED PLASTIC PROFILED ELEMENTS CONTAINING CONTINUOUSLY INSERTED DAMPING ELEMENTS
PROFILÉS EXTRUDÉS EN MATIÈRE PLASTIQUE, CONTENANT DES ÉLÉMENTS ISOLANTS INTRODUITS EN CONTINU

(30) Priorität: 27.04.2011 EP 11163822
(43) Veröffentlichungstag der Anmeldung: 05.03.2014
(73) Patentinhaber: BASF SE, 67056 Ludwigshafen am Rhein (DE)
(72) Erfinder: MOHMEYER,, Nils, 49076 Osnabrück (DE); GAUKESBRINK, Ulrich, 49191 Belm (DE); GRIESER-SCHMITZ, Christof, 49088 Osnabrück (DE); KROGMANN, Jörg, 49393 Lohne (DE)
(86) Internationale Anmeldenummer: PCT/EP2012/057690
(87) Internationale Veröffentlichungsnummer: WO 2012/146676

(56) Entgegenhaltungen:
- EP-A1- 1 312 458
- EP-A1- 2 213 440
- EP-A2- 1 595 904
- GB-A- 1 157 239
- US-A- 5 653 923
- US-A1- 2002 112 428

## Beschreibung

Die vorliegende Erfindung betrifft ein kontinuierliches Verfahren zur Herstellung eines Profils, gemäß dem Anspruch 1, ein Profil, gemäß dem Anspruch 4, die Verwendung, gemäß dem Anspruch 5, eines solchen Profils zur Herstellung von Fensterrahmen, Türrahmen, im

Innenausbau, in Vorrichtungen, bei denen im Betrieb Temperaturunterschiede zwischen Innenraum und Außenraum auftreten.

Mit dem erfindungsgemäßen Verfahren können Profile hergestellt werden, aus denen Fenster- oder Türrahmen für den Hausbau hergestellt werden können.

Verfahren zur Herstellung ähnlicher Profile, bzw. von Fenster- oder Türrahmen sind aus dem Stand der Technik bereits bekannt.

DE 28 44 006 A1 offenbart ein Verfahren zum Extrudieren von Kunststoff-Profilen mit einem allseitig von einem Mantel aus einem Kunststoff umschlossenen Kern aus aufgeschäumtem Kunststoff, bei dem in einem Arbeitsgang das Material für den Mantel in das Extruder-Werkzeug eingebracht und gleichzeitig das Kernmaterial in den Hohlraum des geformten Mantels eingeführt wird, wobei beim Aufschäumen des Kernmaterials in den Hohlraum des Mantels eingebrachte Gase über das Extruder-Werkzeug abgeführt werden. Problematisch bei diesem Verfahren ist, dass kein besonders einheitlicher Schaum in dem Profil erhalten wird, obschon die erzeugten Gase abgeführt werden. Des Weiteren ist an diesem Verfahren nachteilig, dass das Reaktivsystem für den geschäumten Kunststoff durch das heiße Extruderwerkzeug geführt werden muss, was energetisch und prozesstechnisch nachteilig ist.

WO 99/16996 A1 offenbart ein Verfahren zur Herstellung von Rahmenprofilen für Fenster oder Türen, bei dem zunächst das äußere Profil aus einem thermoplastischen Kunststoff hergestellt wird und anschließend ein schäumfähiges Gemisch auf Basis eines Polyurethans in das Profil eingebracht wird, und unter Ausschäumen des Gemisches ein haftfester Verbund zwischen Außenprofil und Schaumstoff erzeugt wird. Dieses Dokument offenbart auch ein Verfahren, bei dem in das zunächst ausgeformte Außenprofil ein vorgefertigter, fertig geschäumter Schaumkern eingelegt wird.

DE 199 61 306 A1 offenbart ebenfalls ein Verfahren zur Herstellung eines Profils durch Extrusion. Dieses Profil enthält eine Außenschale und einen geschäumten Innenkern. Es wird in diesem Verfahren zunächst die Profil-Außenschale extrudiert und anschließend mit schäumfähigem Material ausgeschäumt.

DE 1 959 464 offenbart ebenfalls ein Verfahren zum kontinuierlichen Strangpressen von endlosen Profilen mit einem Mantel aus thermoplastischem Kunststoff und einem Schaumstoffkern, wobei zunächst der Mantel aus thermoplastischem Kunststoff durch Extrusion hergestellt wird, und diese anschließend mit einem schäumfähigen Material ausgeschäumt wird.

In dem Verfahren gemäß der DE 1 779 271 wird eine flexible Kunststoff-Profilleiste hergestellt, indem die flexible Außenhülle und der geschäumte Kern gleichzeitig durch Extrusion hergestellt werden.

US 2006/0255488 A1 offenbart ebenfalls ein Verfahren zur Herstellung von Kunststoff-Profilen, die einen geschäumten Kern aufweisen, durch gleichzeitiges Extrudieren beider Materialien, jeweils in geschmolzenem Zustand.

EP 2 072 743 A2 offenbart ein Verfahren zum Ausschäumen eines hohlen Fenster- oder Türrahmens. Dazu werden durch Extrusion hergestellte Kunststoffprofile zu fertigen Fenster- oder Türrahmen zusammengesetzt und anschließend durch Einbringen eines schäumfähigen Materials ausgeschäumt.

Im Stand der Technik sind auch Verfahren zur Herstellung solcher Profile, die einen geschäumten Kern aufweisen, bekannt, wobei fertig geschäumte Schaumstoff-Stecklinge in die durch Extrusion hergestellten Profile eingesteckt werden, siehe beispielsweise DE 202009003392 U1 oder WO 02/090703 A2.

EP 1 595 904 A offenbart ein kontinuierliches Verfahren zur Herstellung eines Profils enthaltend die Schritten
(A) Einbringen einer Folie in ein Backenband, das die Form des Profils aufweist,
(B) Einbringen wenigstens eines flüssigen, schäumbaren Reaktivsystems des Kerns enthaltend wenigstens ein Polyisocyanat a) und wenigstens eine höhermolekulare Verbindung mit gegenüber Isocyanatgruppen reaktiven Gruppen b), in das Backenband, so dass eine gegebenenfalls vorliegende Folie das Vorläufermaterial zumindest teilweise umschließt,
(C) Ausformen des Kerns in dem Backenband,
(E) Einbringen des Kerns aus Schritt (C) oder (D) in einen Extruder (7) mit angeschlossener Extrusionsdüse zur Herstellung von Hohlprofilen, um den Kern mit einem Mantel aus wenigstens einem thermoplastischen Material zu umhüllen, um das Profil zu erhalten,
F) gegebenenfalls Abkühlen des Profils aus Schritt (E) und
(G) gegebenenfalls Schneiden des Profils aus Schritt (E) oder (F).

Der Anspruch 1 unterscheidet sich von diesem Verfahren darin, dass kein Innenrohr (Mediumrohr 1) eingesetzt wird.

US 5 653 923 A offenbart ein kontinuierliches Verfahren zur Herstellung eines Profils enthaltend den Schritten
(A) Einbringen einer Folie in ein Backenband, das die Form des Profils aufweist,
(B) Einbringen wenigstens eines flüssigen, schäumbaren Reaktivsystems des Kerns in das Backenband, so dass eine gegebenenfalls vorliegende Folie das Vorläufermaterial zumindest teilweise umschließt,
(C) Ausformen des Kerns in dem Backenband.

Der Anspruch 1 unterscheidet sich von diesem Verfahren darin, dass für den Kern ein reaktives Gemisch zur Herstellung eines PU-Schaums eingesetzt wird und die Herstellung des Mantels mittels eines Extruders erfolgt.

Die aus dem Stand der Technik genannten Verfahren weisen beispielsweise den Nachteil auf, dass ein schäumfähiges Material in Kunststoffprofile eingebracht werden muss, wobei diese Kunststoffprofile kurz zuvor durch Schmelzextrusion hergestellt worden sind. Dadurch bedingt sind die Kunststoffprofile noch heiß oder zumindest warm, was das Ausschäumen des eingebrachten schäumfähigen Materials negativ beeinflusst. Des Weiteren können beim Ausschäumen einer Kammer des Kunststoffprofils bei einem kontinuierlichen Verfahren lediglich Profile mit einer, aber nicht mehreren, Schaumstoff enthaltenden Kammern hergestellt werden, da die Lanze, durch die das Reaktivsystem zugeführt wird, in das Profil eingeführt werden muss. Des Weiteren ist nachteilig, dass das Polyurethan-Reaktivsystem durch das heiße Extruderwerkzeug geführt werden muss.

Aufgabe der vorliegenden Erfindung gegenüber dem Stand der Technik ist es, ein kontinuierliches Verfahren zur Herstellung von Profilen enthaltend wenigstens einen Kern aus einem geschäumten Material und einen Mantel aus einem thermoplastischen Material bereitzustellen, welches sich dadurch auszeichnet, dass es entsprechende Profile zugänglich macht, die sich durch eine besonders gleichmäßige und homogene Verteilung des Schaumstoffs in der dafür vorgesehenen Kammer des Profils auszeichnen. Des Weiteren soll in dem Verfahren das Schäumen unter Bedingungen erfolgen, die eine ideale Ausbildung des Schaumstoffs ermöglichen. Des Weiteren soll es das Verfahren ermöglichen, dass keine komplizierte, prozesstechnische Führung der einzelnen Vorläuferverbindungen für Mantel oder Kern notwendig sind.

Diese Aufgaben werden erfindungsgemäß gelöst durch ein kontinuierliches Verfahren zur Herstellung eines Profils gemäß dem Anspruch 1.

Das erfindungsgemäße Verfahren dient zur Herstellung eines Profils, gemäß dem Anspruch 4.

Polyurethane, insbesondere in geschäumter Form, sind dem Fachmann an sich bekannt, und beispielsweise in DE 10 124 333 beschrieben.

Polyurethan-Schaumstoffe, insbesondere Polyurethan-Hartschaumstoffe, sind seit langem bekannt und vielfach in der Literatur beschrieben. Ihre Herstellung erfolgt üblicherweise durch Umsetzung von organischen Polyisocyanaten a) mit Verbindungen mit mindestens zwei mit Isocyanatgruppen reaktiven Gruppen b1), zumeist Polyolen und/oder Polyamine. Die wenigstens eine höhermolekulare Verbindung mit gegenüber Isocyanatgruppen reaktiven Gruppen b) ist erfindungsgemäß bevorzugt eine Verbindung mit mindestens zwei mit Isocyanatgruppen reaktiven Gruppen b1).

Als organische Polyisocyanate a) kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch so genannte modifizierte mehrwertige Isocyanate, d. h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, so genannten Polyisocyanatprepolymeren, sowie deren Mischungen mit anderen Di- und Polyisocyanaten Verwendung finden.

Die Polyisocyanatkomponente a) wird bevorzugt in Form von Polyisocyanatprepolymeren eingesetzt. Diese Polyisocyanatprepolymere sind erhältlich, indem vorstehend beschriebene Polyisocyanate, beispielsweise bei Temperaturen von 30 bis 100 °C, bevorzugt bei etwa 80 °C, mit Polyolen zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, Polyethern, beispielsweise ausgehend von Ethylenoxid und/oder Propylenoxid bzw. Polytetrahydrofuran (PTHF), oder Polycarbonatole, wie beispielsweise in der europäischen Patentanmeldung EP 3007101407.0 beschrieben, verwendet.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Prepolymere auf Etherbasis werden vorzugsweise erhalten durch Umsetzung von Polyisocyanaten, besonders bevorzugt 4,4'-MDI, mit 2- bis 3-funktionellen Polyoxypropylen- und/oder Polyoxypropylen-Polyoxyethylenpolyolen. Ihre Herstellung erfolgt zumeist durch die allgemein bekannte basisch katalysierte Anlagerung von Propylenoxid allein, im Gemisch mit Ethylenoxid oder blockweise an H-funktionelle, insbesondere OH-funktionelle Startsubstanzen. Als Startsubstanzen dienen beispielsweise Wasser, Ethylenglykole oder Propylenglykole beziehungsweise Glycerin oder Trimethylolpropan. Weiter können als Katalysatoren auch Multimetallcyanidverbindungen, sogenannte DMC-Katalysatoren, eingesetzt werden. Desweiteren können als Katalysatoren aus Lewis-Säuren, wie Bortrifluorid, eingesetzt werden. Vorzugsweise werden als Polyol Polyether verwendet, wie sie nachstehend unter b) beschrieben sind.

Bei Verwendung von Ethylenoxid/Propylenoxidmischungen wird das Ethylenoxid bevorzugt in einer Menge von 10-50 Gew.-%, bezogen auf die Gesamtmenge an Alkylenoxid, eingesetzt. Der Einbau der Alkylenoxide kann hierbei blockweise oder als statistisches Gemisch erfolgen. Besonders bevorzugt ist der Einbau eines Ethylenoxid-Endblocks ("EO-cap"), um den Gehalt an reaktiveren primären OH-Endgruppen zu erhöhen. Das zahlenmittlere Molekulargewicht der Polyole liegt vorzugsweise zwischen 400 und 4500 g/mol.

Besonders bewährt hat sich als organisches Polyisocyanat Roh-MDI mit einem NCO-Gehalt von 29 bis 33 Gew.-% und einer Viskosität bei 25 °C im Bereich von 150 bis 1000 mPa·s.

Als höhermolekulare Verbindungen mit gegenüber Isocyanatgruppen reaktiven Gruppen b), insbesondere als Verbindungen mit mindestens zwei gegenüber Isocyanat reaktiven Gruppen b1), kommen insbesondere Polyetheralkohole und/oder Polyesteralkohole und/oder Polycarbonatole mit OH-Zahlen im Bereich von 100 bis 1200 mgKOH/g zum Einsatz.

Bevorzugt werden als höhermolekulare Verbindungen b) Mischungen, enthaltend Polyetherole und Polyesterole eingesetzt.

Höhermolekulare Verbindungen b) mit gegenüber Isocyanatgruppen reaktiven Gruppen haben im Rahmen der vorliegenden Erfindung bevorzugt ein Molekulargewicht von größer 400 g/mol, Vorzugsweise ist das Molekulargewicht größer 550 g/mol. Die mittlere Funktionalität der höhermolekularen Verbindungen mit gegenüber Isocyanatgruppen reaktiven Gruppen ist bevorzugt kleiner als 2,5.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicar-bonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. e-Caprolacton oder Hydroxycarbonsäuren, z.B. w-Hydroxycapronsäure.

Zur Herstellung der Polyesterpolyole können die organischen, z. B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z. B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 1,8 bis 4, besonders bevorzugt von 1,9 bis 3 und insbesondere von 2,0 bis 2,5 und ein Molekulargewicht von 480 bis 5000, vorzugsweise 1000 bis 4500 g/mol und insbesondere 1600 bis 4500.

Die bevorzugten Polyetheralkohole haben vorzugsweise eine Funktionalität zwischen 2 und 8, insbesondere 3 bis 8.

Insbesondere kommen Polyetherpolyole b1), die nach bekannten Verfahren, beispielsweise durch anionische Polymerisation von Alkylenoxiden in Gegenwart von Katalysatoren, vorzugsweise Alkalihydroxiden, Aminen oder so genannte DMC-Katalysatoren, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Toluoldiamin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mg KOH/g bis 1200 mg KOH/g und insbesondere 240 mg KOH/g bis 570 mg KOH/g.

Zu den Verbindungen mit mindestens zwei gegenüber Isocyanat reaktiven Wasserstoffatomen b1) gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b1), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993, Seiten 57 bis 74.

In den bevorzugt im Kern des Profils vorliegenden Polyurethanen, liegen in einer weiter bevorzugten Ausführungsform weitere Additive, beispielsweise ausgewählt aus der Gruppe bestehend aus Flammschutzmitteln, oberflächenaktiven Substanzen, Schaumstabilisatoren, Zellreglern, Füllstoffen, Pigmenten, Farbstoffen, Flammschutzmitteln, Hydrolyseschutzmitteln Antistatika, fungistatisch und bakteriostatisch wirkenden Mitteln und Mischungen davon, vor.

Als Flammenschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen. Typische Vertreter dieser Gruppe von Flammschutzmitteln sind Triethylphosphat, Diphenylkresylphosphat, Tris-(Chlorpropyl)-phosphat sowie Diethylethanphoshonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphtalsäure mit aliphatischen Diolen und Alkoxylierungsprodukte des Dibombutendiols. Auch Verbindungen, die sich aus der Reihe der bromierten, OH-Gruppen enthaltenden Neopentylverbindungen ableiten, können zur Anwendung kommen.

Die Herstellung der bevorzugt im Kern des Profils eingesetzten Polyurethane werden üblicherweise Treibmittel, Katalysatoren und Zellstabilisatoren sowie, falls erforderlich weitere, Hilfs- und/oder Zusatzstoffen eingesetzt.

Als Treibmittel kann Wasser verwendet werden, das mit Isocyanatgruppen unter Abspaltung von Kohlendioxid reagiert. In Kombination mit oder an Stelle von Wasser können auch so genannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrig siedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan; auch Fluoralkene können verwendet werden. Die genannten physikalischen Treibmittel können allein oder in beliebigen Kombinationen untereinander eingesetzt werden.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise stark basische Amine, wie z. B. sekundäre aliphatische Amine, Imidazole, Amidine, sowie Alkanolamine.

Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als weitere Additive kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über ein Verfahren zur Herstellung der eingesetzten Polyurethane, sowie zu den eingesetzten Ausgangsstoffen, Treibmitteln, Katalysatoren sowie Hilfs- und/oder Zusatzstoffen finden sich beispielsweise im Kunststoffhandbuch, Band 7, "Polyurethane" Carl-Hanser-Verlag München, 1. Auflage, 1966, 2. Auflage, 1983 und 3. Auflage, 1993, Seiten 104 bis 192.

Zur Herstellung der Polyurethan-Hartschaumstoffe werden die Polyisocyanate a), und die Polyolkomponente b1) in solchen Mengen zur Umsetzung gebracht, dass der Isocyanatindex bei 90 bis 220, vorzugsweise 100 bis 200, insbesondere 110 bis 190 liegt.

Die Dichte der bevorzugt eingesetzten Polyurethan-Hartschaumstoffe beträgt bevorzugt 10 bis 400 kg/m³, besonders bevorzugt 20 bis 200 kg/m³, ganz besonders bevorzugt 30 bis 100 kg/m³.

Details zur Herstellung der erfindungsgemäßen Polyurethan-Schaumstoffe werden in Schritt (B) und (C) genannt.

Der Kern des Profils kann im Allgemeinen jede gewünscht Form aufweisen, die dem Fachmann als geeignet für die gewünschte Anwendung erscheint. Im Querschnitt kann der Kern eine runde und/oder eckige Form aufweisen. Zusätzlich kann der Kern gleichmäßig oder ungleichmäßig ausgeformt sein, und beispielsweise Aussparungen, Rillen, Kanten etc. aufweisen, wobei diese Profilierungen parallel aber auch senkrecht zur Produktionsrichtung verlaufen können. Der in Schritt (C) des erfindungsgemäßen Verfahrens ausgeformte Kern gibt in einer bevorzugten Ausführungsform die Form des herzustellenden Profils bzw. den Bereich, der das Dämmelement umschließt, vor. In einer weiteren Ausführungsform des hergestellten Profils, beispielsweise bei einem Fensterprofil, wird der hergestellte Kern von einem Mantel umhüllt, an den Stege angebunden sind, an die dann gegebenenfalls weitere Stege angebunden sind. Die Summe aus Kern, Mantel und Stegen bildet das hergestellte Profil.

Die Form des Kerns wird wiederum durch die Form des in erfindungsgemäß eingesetzten Backenbandes vorgegeben. Der Kern weist im Allgemeinen Abmessungen von 5 bis 250 mm, bevorzugt 10 bis 150 mm, besonders bevorzugt 20 bis 100 mm, insbesondere 25 bis 80 mm auf, wobei diese Abmessungen bei ungleichmäßig geformten Kernen die in einer Richtung vorliegenden größten Entfernungen beschreiben.

Es ist auch möglich, dass das Profil zwei, drei oder vier Kerne aus einem Polyurethan-Schaumstoff oder einer Mischung enthaltend einen Polyurethan-Schaumstoff aufweist. Für den Fall, dass zwei, drei oder vier Kerne in dem hergestellten Profil vorliegen, können diese bezüglich ihrer Form gleich oder unterschiedlich sein.

Das hergestellte Profil enthält neben dem wenigstens einen Kern wenigstens einen Mantel. Des Weiteren weist der Mantel in einer bevorzugten Ausführungsform Stege auf, die an ihn angebunden sind.

Der Mantel an sich, bzw. der Mantel und die gegebenenfalls vorliegenden Stege des Mantels weisen im Allgemeinen eine Dicke von 1 bis 20 mm, bevorzugt 2 bis 15 mm, besonders bevorzugt 3 bis 10 mm auf, wobei der Mantel und die Stege unterschiedliche oder gleiche Dicken aufweisen können. In einer bevorzugten Ausführungsform weist der Mantel oder die Stege an verschiedenen Stellen des Profils verschiedene Dicken auf, wobei die Dicken in Längsrichtung gleich sind, aber in Querrichtung unterschiedlich sein können. Dies ist beispielsweise von der Ausformung des Profils abhängig, die wiederum von der späteren Anwendung abhängig ist.

Der Mantel enthält Polyvinylchlorid (PVC). Polyvinylchlorid (PVC) und dessen Herstellung durch Polymerisation von Vinylchlorid ist dem Fachmann an sich bekannt.

In dem hergestellten Profil liegt gegebenenfalls wenigstens eine Folie zwischen Kern und Mantel vor. Unter dem Begriff "Folie" wird erfindungsgemäß eine Schicht bzw. Beschichtung verstanden, die gegebenenfalls zwischen Kern und Mantel in dem erfindungsgemäß hergestellten Profil vorliegt.

Die Folie zwischen Kern und Mantel des Profils enthält Teflon, ganz besonders bevorzugt besteht die Folie aus Teflon. In dieser Ausführungsform verhindert die vorliegende Folie ein dauerhaftes Haften des Kerns am Mantel, so dass aus dem Profil hergestellte Gegenstände, beispielsweise Fenster- oder Türrahmen, nach Verwendung leicht recycelbar sind, da sich die unterschiedlichen Kunststoffe, beispielsweise Polyurethan-Schaumstoff des Kerns und Polyvinylchlorid des Mantels, leicht voneinander trennen lassen.

Die Folie enthält ein thermoplastisches Polyurethan. Dadurch wird eine besonders intensive Haftung der Folie am Kern erzielt. Des Weiteren wird auch eine besonders gute Haftung der Folie am Mantel erzielt, so dass insgesamt eine besonders gute und starke Haftung der drei Komponenten untereinander erzielt wird, und ein besonders stabiles Profil erhalten wird. Bevorzugt eingesetzte thermoplastische Polyurethane sind beispielsweise aufgebaut aus vorwiegend MDI und PTHF Polyole, wie z. B. beschrieben in DE 10234007.

Die Folie, die zwischen Kern und Mantel vorliegt, weist eine Dicke von beispielsweise 10 bis 3000 µm, bevorzugt 25 bis 1000 µm, besonders bevorzugt 50 bis 750 µm, insbesondere 100 bis 500 µm auf.

Die einzelnen Schritte des kontinuierlichen Verfahrens werden im Folgenden detailliert erläutert:

### Schritt (A):

Der optionale Schritt (A) des erfindungsgemäßen Verfahrens umfasst das Einbringen einer Folie in ein Backenband, das die Form des Profils aufweist.

Schritt (A) des Verfahrens wird durchgeführt, wenn zwischen dem Kern und dem Mantel des herzustellenden Profils eine Folie vorliegen soll. Diese Folie wird bevorzugt als Rollenware vorgelegt und mittels einer dem Fachmann bekannten Abspulvorrichtung bzw. Fördervorrichtung in die eigentliche Vorrichtung zur Herstellung des Profils eingebracht.

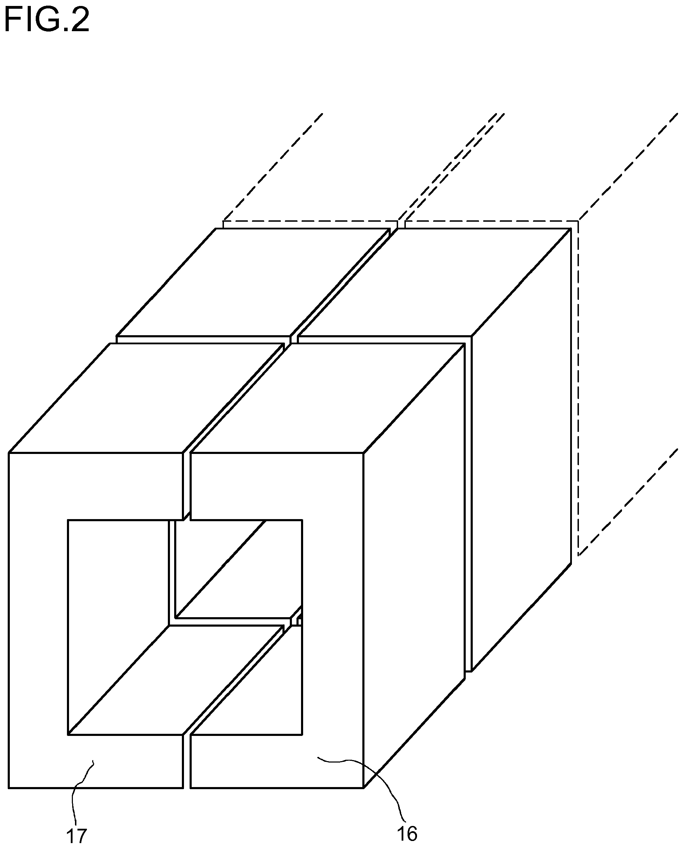

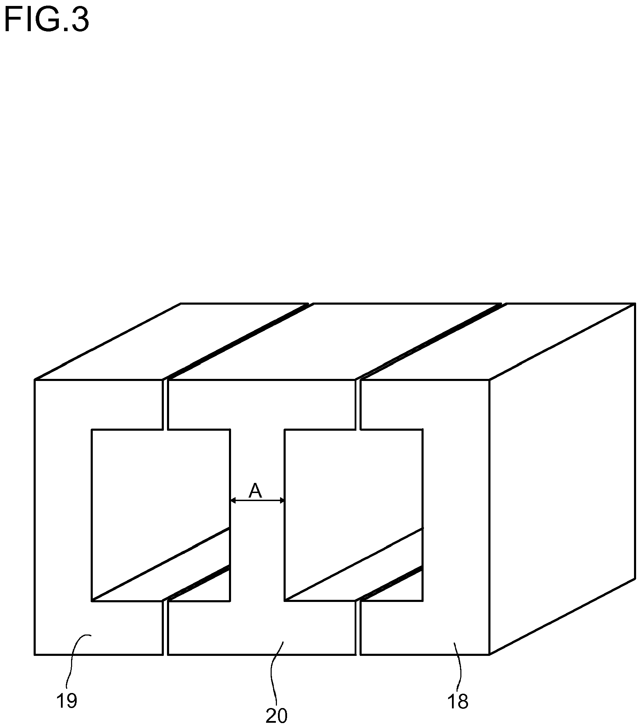

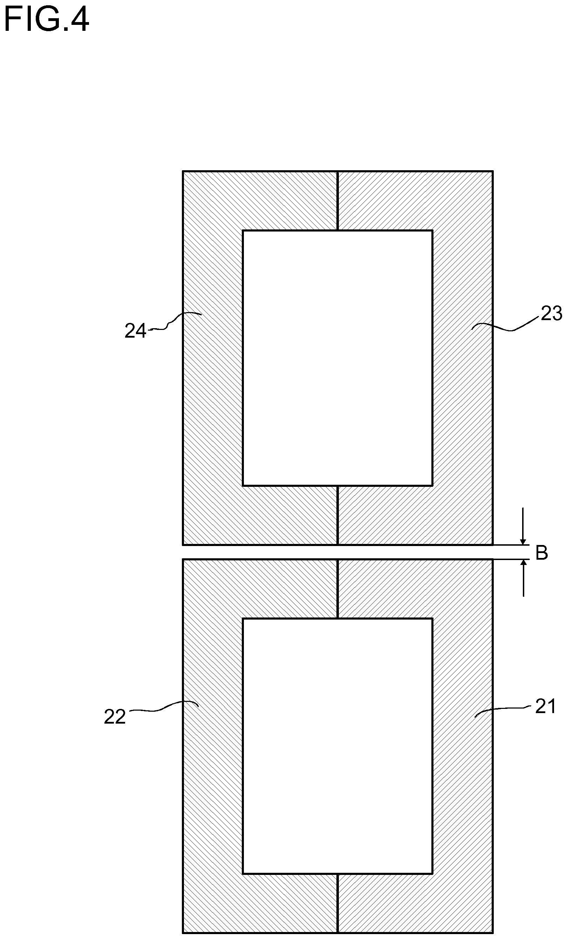

Die Folie wird in Schritt (A) in ein dem Fachmann bekanntes Backenband eingebracht. Dabei ist es wesentlich, dass dieses Backenband die Form des herzustellenden Profils aufweist. Mögliche erfindungsgemäße Ausformungen dieses Backenbandes sind in den Figuren 2, 3 und 4 abgebildet.

Je nachdem, wie viele Kerne das herzustellende Profil enthalten soll, wird ein entsprechend ausgebildetes Backenband mit einer entsprechenden Anzahl von Elementen in Schritt (A) bereitgestellt. Liegt in dem herzustellenden Profil ein Kern vor, so ist bevorzugt ein Backenband mit zwei Elementen geeignet. Liegen in dem herzustellenden Profil zwei Kerne vor, so wird bevorzugt ein Backenband mit drei Elementen eingesetzt. Liegen in dem herzustellenden Profil drei Kerne vor, so wird bevorzugt ein Backenband mit vier Elementen eingesetzt. Liegen in dem herzustellenden Profil vier Kerne vor, so wird bevorzugt ein Backenband mit fünf Elementen verwendet. Liegen mehr als ein Kern in dem hergestellten Profil vor, so können diese nebeneinander und/oder übereinander in dem Profil angeordnet sein.

Das eingesetzte Backenband ist dem Fachmann an sich bekannt und beispielsweise beschrieben in DE 102004023881.

In Schritt (A) des Verfahrens wird die Folie so in das Backenband eingebracht, dass diese bevorzugt am Boden des Backenbandes aufliegt und an den Seiten des Backenbandes bis zum oberen Rand geführt wird. In einer bevorzugten Ausführungsform ist die Folie so bemessen, dass sie am oberen Rand des Backenbandes überlappt und durch die im Backenband vorliegende Temperatur miteinander verschmilzt, sofern die Backenbandtemperatur oder die Temperatur der reagierenden PU Schaums überhalb der Tg oder dem Tm der verwendeten Folie liegt, so dass es zur Ausformung eines Schlauches aus der zugeführten Folie kommt, wobei der Schlauch bevorzugt exakt die Form des herzustellenden Profils, welches durch das Backenband vorgegeben ist, aufweist.

In einer weiteren bevorzugten Ausführungsform wird Schritt (A) so durchgeführt, dass bei Einbringen der Folie in das Backenband die Backen noch nicht vollständig geschlossen sind. In dieser Ausführungsform ist das Einbringen der Folie erleichtert und ein faltenfreies Einbringen wird ermöglicht.

Die Folie wird dem Backanband bevorzugt über eine Formungsvorrichtung, bevorzugt eine Formschulter, zugeführt.

Schritt (A) des Verfahrens wird bevorzugt bei einer Temperatur von Raumtemperatur bis 40 °C, besonders bevorzugt Raumtemperatur bis 30 °C, durchgeführt.

### Schritt (B):

Schritt (B) des Verfahrens umfasst das Einbringen wenigstens eines flüssigen, schäumbaren Reaktivsystems des Kerns enthaltend wenigstens ein Polyisocyanat a) und wenigstens eine höhermolekulare Verbindung mit gegenüber Isocyanatgruppen reaktiven Gruppen b), in das Backenband, so dass eine gegebenenfalls vorliegende Folie das Vorläufermaterial zumindest teilweise umschließt.

Das Einbringen in Schritt (B) des Verfahrens erfolgt durch dem Fachmann bekannte Vorrichtungen. In Schritt (B) werden die zur Herstellung dieses Polyurethan-Schaumstoffs notwendigen Komponenten, d. h. wenigstens eine Polyisocyanat-Komponente und eine Polyol-Komponente, sowie die weiter oben genannten weiteren Komponenten, eingebracht.

In einer besonders bevorzugten Ausführungsform erfolgt Schritt (B) in der Art, dass eine Mischung enthaltend die Diisocyanat-Komponente und die Polyol-Komponente eingebracht wird. Die Mischung wird aus den einzelnen Substanzen in einer dem Fachmann bekannten Mischeinrichtung erzeugt. Beispielsweise werden die Katalysatoren und die Treibmittel über weitere Dosierpumpen in die Polyol-Komponente dosiert

In einer besonders bevorzugten Ausführungsform, in der Schritt (A) des erfindungsgemäßen Verfahrens durchgeführt wurde, wird das wenigstens eine flüssige, schäumbare Reaktivsystem des Kerns in Schritt (B) in die in Schritt (A) eingebrachte Folie eingefüllt, wobei sich bevorzugt in Schritt (A) aus der Folie ein Schlauch gebildet hat bzw. sich in Schritt (B) bildet. Die Menge des einzufüllenden Vorläufermaterials wird dabei durch den Fachmann so bemessen, dass nach Aufschäumen der gesamte, für den Kern zur Verfügung stehende Raum mit Polyurethan-Schaumstoff ausgefüllt ist.

Für den Fall, dass Schritt (A) des Verfahrens nicht durchgeführt wird, ist es bevorzugt, dass das Backenband vor Einfüllen des Vorläufermaterials in Schritt (B) des Verfahrens mit einem Trennmittel versehen wird. Im Allgemeinen sind alle, dem Fachmann bekannten Trennmittel geeignet, insbesondere Silikone oder Wachse.

Schritt (B) des Verfahrens wird bevorzugt bei Raumtemperatur durchgeführt, wobei die Ausgangskomponenten für die Polyurethanherstellung dem Fachmann bekannte Temperaturen aufweisen.

### Schritt (C):

Schritt (C) des Verfahrens umfasst das Ausformen des Kerns im Backenband.

Schritt (C) wird bevorzugt so durchgeführt, dass das in Schritt (B) eingebrachte schäumbare Vorläufermaterial im Backenband aufgeschäumt wird. Dabei wird das Vorläufermaterial bzw. der sich ausbildende Kern bevorzugt durch die Bewegung des Backenbandes transportiert. In einer weiteren bevorzugten Ausführungsform ist nach dem Backenband eine Zugeinheit, beispielsweise zwei motorbetriebene Radsysteme, vorgesehen, die die Folie, bevorzugt beim Anfahren, durch das Backenband zieht. In einer weiteren bevorzugten Ausführungsform, bevorzugt nach dem Anfahren, d. h. wenn das Verfahren stabil läuft, wird das mit Folie umschlossene, ausgehärtete Hartschaumprofil durch eine Zugeinheit, beispielsweise zwei motorbetriebene Radsysteme, transportiert.

Durch die im Backenband vorherrschenden Bedingungen bezüglich Druck und Temperatur reagieren die vorliegenden Vorläufermaterialien, insbesondere die Polyisocyanat- und Polyol-Komponenten, um den gewünschten Schaumstoff zu erhalten. Durch die Ausformung des Backenbandes, bzw. die in dem Backenband vorliegende Folie nimmt der Schaumstoff beim Aufschäumen die Form des gewünschten Profils an. Durch die eingetragene Menge und die freigeschäumte Dichte erhält man durch "Überfüllung" eine Verdichtung, die notwendig ist, um hohe Homogenität und Stabilität des Schaums zu bekommen.

Schritt (C) des Verfahrens wird bevorzugt bei einer Temperatur von Raumtemperatur bis 55 °C, besonders bevorzugt Raumtemperatur bis 45 °C, durchgeführt.

Gegebenenfalls in Schritt (C) bei der Ausformung des Kerns entstehende Gase werden bevorzugt nicht abgeführt, sondern verbleiben im Material des Kerns. Die Menge an Vorläufermaterial kann dazu bevorzugt vom Fachmann so bemessen werden, dass das Backenband bzw. eine darin vorliegende Folie oder ein daraus geformter Schlauch nach Aufschäumen mit einem Schaumstoff gefüllt ist, der eine gewünschte Dichte und Beschaffenheit aufweist.

Schritt (C) des Verfahrens wird im Allgemeinen bei einem Druck von 0,8 bis 1,2 bar (a), bevorzugt 0,9 bis 1,1 bar (a), besonders bevorzugt bei Atmosphärendruck durchgeführt.

### Schritt (D):

Der optionale Schritt (D) des Verfahrens umfasst das Abkühlen des Kerns aus Schritt (C).

Schritt (D) des Verfahrens wird durchgeführt, wenn der Kern aus wenigstens einem Polyurethan-Schaumstoff der gegebenenfalls von wenigstens einer Folie zumindest teilweise umhüllt ist, eine Temperatur aufweist, die für den anschließenden Schritt (E) des Verfahrens zu hoch ist. Ein Abkühlen kann nach dem Fachmann bekannten Verfahren durchgeführt werden. Beispielsweise kann der gerade ausgebildete Kern durch ein entsprechendes kühlendes Medium, beispielsweise Wasser oder Luft geführt werden. In einer bevorzugten Ausführungsform wird der optionale Schritt (D) des Verfahrens durchgeführt.

In Schritt (D) des Verfahrens wird der Kern bevorzugt auf eine Temperatur von Raumtemperatur bis 70 °C, bevorzugt Raumtemperatur bis 50 °C, abgekühlt.

### Schritt (E):

Schritt (E) des Verfahrens umfasst das Einbringen des Kerns aus Schritt (C) oder (D) in einen Extruder mit angeschlossener Extrusionsdüse zur Herstellung von Ringprofilen, um den Kern mit einem Mantel aus wenigstens einem thermoplastischen Material zu umhüllen, um das Profil zu erhalten.

In Schritt (E) wird der in Schritt (B) erhaltene Kern, der gegebenenfalls von einer Folie umhüllt ist, in einen Extruder eingebracht, der eine Düse enthält, die der Form des Profils nachgebildet ist. In dem Extruder gemäß Schritt (E) wird nun das thermoplastische Material, welches den Mantel bilden soll, in geschmolzener Form auf den Kern aufgebracht. Ausführungsformen dieses verwendeten Extruders sind dem Fachmann im Allgemeinen bekannt und beispielsweise beschrieben in WO 2009/098068.

Nach Schritt (E) wird das Profil enthaltend wenigstens einen Kern aus wenigstens einem geschäumten Material, wenigstens einen Mantel aus wenigstens einem thermoplastischen Material und gegebenenfalls wenigstens eine Folie zwischen Kern und Mantel, erhalten.

Schritt (E) des Verfahrens wird bevorzugt bei einer Temperatur durchgeführt, bei das thermoplastische Material des Mantels geschmolzen ist, beispielsweise von 100 bis 220 °C, besonders bevorzugt 130 bis 190 °C, durchgeführt.

Nach Verlassen des Extruders liegt bevorzugt eine Temperatur vor, bei der das thermoplastische Material fest wird, beispielsweise 25 bis 180 °C, bevorzugt 50 bis 150 °C.

Das Extrudieren von thermoplastischen Materialien ist dem Fachmann an sich bekannt und beispielsweise beschrieben in "Einführung in die Kunststoffverarbeitung", 5. Ausgabe, September 2006; S. 87 - 180; Walter Michaeli; Hanser Fachbuchverlag.

Die vorliegende Beschreibung betrifft auch das Verfahren, wobei in Schritt (E) eine Armierung so in das Backenband, bzw. in die Extrusionsdüse, d. h. in die profilförmige Düse des Extruders, eingebracht wird, dass diese Armierung im Profil zwischen Kern und Mantel oder im Wesentlichen vollständig im Mantel vorliegt. Das Vorliegen einer Armierung in einem entsprechenden Profil ist dem Fachmann an sich bekannt. Die Armierung kann aus jedem Material bestehen, welches dem Fachmann geeignet erscheint. Beispielsweise enthält die eingebrachte Armierung wenigstens ein Material ausgewählt aus der Gruppe bestehend aus Metallen, beispielsweise Aluminium oder Eisen, Kunststoffen, beispielsweise Polyester wie Polyethylenterephthalat oder Polybutylenterephthalat, glasfaserverstärkten Kunststoffen und Mischungen davon. Armierungen aus Kunststoff oder glasfaserverstärktem Kunststoff sind dabei bevorzugt.

Wird eine Armierung in das Profil eingebracht, so kann diese fertig ausgeformt, beispielsweise als Band, dem Extruder zugeführt werden. In einer zweiten Ausführungsform wird die Armierung gleichzeitig mit dem Mantel des Profils im Extruder extrudiert. Dazu wird das Material der Armierung, bevorzugt in geschmolzenem Zustand, über den Extruder zugeführt.

Die Armierung weist in einer bevorzugten Ausführungsform Abmessungen auf, die abhängig sind von den Abmessungen des Profils und eine möglichst hohe Stabilität des amierten Profils ermöglichen. Dabei ist die Armierung so ausgeführt, dass ein Wärmetransport innerhalb des Profils, beispielsweise in Fernster- oder Türrahmen, reduziert ist.

### Schritt (F):

Der optionale Schritt (F) des Verfahrens umfasst das Abkühlen des Profils aus Schritt (E). Dieses Abkühlen kann nach dem Fachmann bekannten Verfahren durchgeführt werden, beispielsweise Führen des erzeugten Profils durch ein entsprechendes kühlendes Medium, beispielsweise Luft oder Wasser.

In Schritt (F) des Verfahrens wird das Profil bevorzugt auf eine Temperatur von Raumtemperatur bis 60 °C, bevorzugt Raumtemperatur bis 40 °C, abgekühlt, realisiert durch dem Fachmann bekannte Verfahren.

### Schritt (G):

Der optionale Schritt (G) des Verfahrens umfasst das Schneiden des Profils aus Schritt (E) oder (F) des Verfahrens. Vorrichtungen zum Schneiden des Profils gemäß Schritt (G) sind dem Fachmann im Allgemeinen bekannt, beispielsweise Sägen. Da durch das kontinuierliche Verfahren im Prinzip ein endloses Profil hergestellt werden kann, kann dieses in Schritt (G) des Verfahrens in für die Anwendung geeignete Längen geschnitten werden, beispielsweise Stücke von 1 bis 12 m, bevorzugt 2 bis 8 m.

Die hergestellten Profile können mit einer Beschichtung versehen werden. Dies ist beispielsweise dann notwendig bzw. sinnvoll, wenn der für den Mantel verwendete Kunststoff an sich nicht licht- und/oder witterungsstabil ist. Eine Beschichtung auf Acrylat-Basis oder auf Basis von aliphatischem Polyurethan kann verwendet werden, um licht- und/oder witterungsstabile Profile zu erhalten.

Die Beschichtung kann nach Herstellen des Mantels aufgebracht werden, beispielsweise nach Schritt (E), (F) und/oder (G). Verfahren und Vorrichtungen zum Beschichten des Mantels sind dem Fachmann an sich bekannt.

Die vorliegende Erfindung betrifft auch ein Profil gemäß dem Anspruch 4.

Die vorliegende Erfindung betrifft auch die Verwendung des Profils nach Anspruch 4 zur Herstellung von Fensterrahmen, Türrahmen, im Innenausbau oder in Vorrichtungen, bei denen im Betrieb Temperaturunterschiede zwischen Innenraum und Außenraum auftreten, beispielsweise Kühlzellen, Klimageräte, raumlufttechnische Anlagen, Kühlschränke, (Tief-)Kühltruhe oder Poolabdeckungen. Die erfindungsgemäßen Profile werden dabei bevorzugt zur Einfassung oder als Profil von umbautem Raum verwendet.

### Figuren

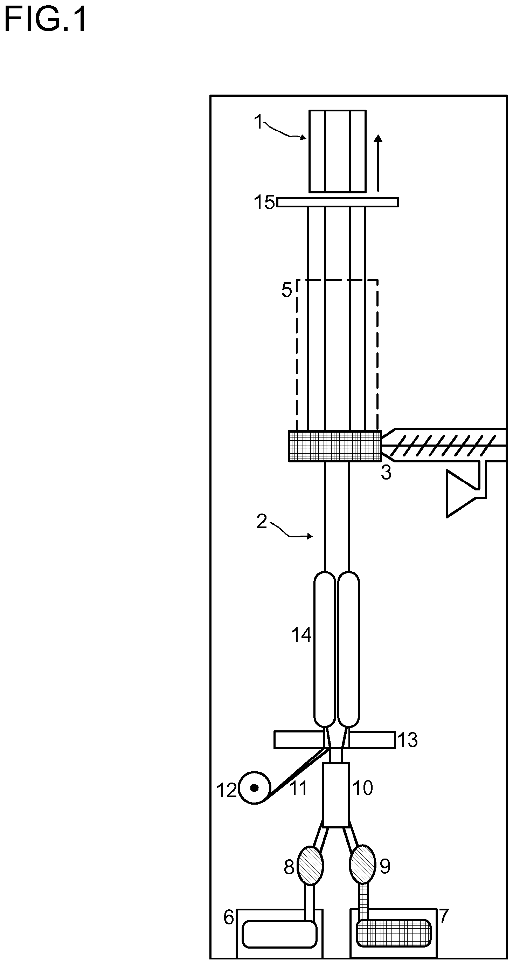

Figur 1 zeigt eine Vorrichtung, die bevorzugt zur Durchführung des Verfahrens eingesetzt wird. Dabei haben die Bezugszeichen die folgende Bedeutung:
   - 1: hergestelltes Profil
   - 2: Kühleinheit
   - 3: Extruder mit profilförmiger Düse
   - 5: Kühlzone
   - 6: Vorratsgefäß Polyol plus ggf. Additive
   - 7: Vorratsgefäß Diisocyanat
   - 8: Pumpe 1
   - 9: Pumpe 2
   - 10: Mischeinheit
   - 11: Folie
   - 12: Abwickeleinheit
   - 13: Formschulter
   - 14: Backenband
   - 15: Säge
Figur 2 zeigt ein Backenband, welches verwendet werden kann, um ein Profil mit einem Schaumstoffkern herzustellen. 16 und 17 bedeuten dabei die beiden Backen.
Figur 3 zeigt ein Backenband, welches dazu eingesetzt werden kann, um ein Profil mit zwei Schaumstoffelement-Kernen herzustellen. Die Bezugszeichen 18, 19 und 20 bezeichnen dabei die drei Backen dieses Backenbandes. A bezeichnet den Abstand zwischen den Schaumstoff-Elementen.
Figur 4 zeigt zwei übereinander angeordnete Backenbänder, wobei die Bezugszeichen 21, 22, 23 und 24 die einzelnen Backen bezeichnen. B bezeichnet den Abstand zwischen den Backenbändern.

## Patentansprüche

1. Kontinuierliches Verfahren zur Herstellung eines Profils bestehend aus wenigstens einem Kern aus einem Polyurethan-Schaumstoff, einem Mantel aus wenigstens einem thermoplastischen Material und gegebenenfalls wenigstens einer Folie zwischen Kern und Mantel, bestehend aus den Schritten
(A) gegebenenfalls Einbringen einer Folie in ein Backenband, das die Form des Profils aufweist,
(B) Einbringen wenigstens eines flüssigen, schäumbaren Reaktivsystems des Kerns enthaltend wenigstens ein Polyisocyanat a) und wenigstens eine höhermolekulare Verbindung mit gegenüber Isocyanatgruppen reaktiven Gruppen b), in das Backenband, so dass eine gegebenenfalls vorliegende Folie das Vorläufermaterial zumindest teilweise umschließt,
(C) Ausformen des Kerns in dem Backenband,
(D) gegebenenfalls Abkühlen des Kerns aus Schritt (C),
(E) Einbringen des Kerns aus Schritt (C) oder (D) in einen Extruder mit angeschlossener Extrusionsdüse zur Herstellung von Hohlprofilen, um den Kern mit einem Mantel aus wenigstens einem thermoplastischen Material zu umhüllen, um das Profil zu erhalten,
(F) gegebenenfalls Abkühlen des Profils aus Schritt (E) und
(G) gegebenenfalls Schneiden des Profils aus Schritt (E) oder (F).

2. Verfahren nach Anspruch 1, **dadurch gekennzeichnet, dass** das wenigstens eine thermoplastische Material ausgewählt ist aus der Gruppe bestehend aus Polyolefinen, Polykondensaten, Polyadditionsprodukten, Wood Plastic Composites und Mischungen davon.

3. Verfahren nach Anspruch 1 oder 2, **dadurch gekennzeichnet, dass** in Schritt (A), (B) und/oder (E) eine Armierung so in das Backenband, bzw. in die Extrusionsdüse des Extruders eingebracht wird, dass diese Armierung im Profil zwischen Kern und Mantel vorliegt.

4. Profil, hergestellt durch das Verfahren nach einem der Ansprüche 1 bis 3, **dadurch gekennzeichnet, dass**
• das Profil aus einem Kern aus einem Polyurethan-Schaumstoff, einem Mantel aus Polyvinylchlorid und einer Folie zwischen Kern und Mantel besteht,
• die Folie den Kern zumindest teilweise, bevorzugt vollständig, umschließt, und
• die Folie ein thermoplastisches Polyurethan oder Teflon enthält.

5. Verwendung des Profils nach Anspruch 4 zur Herstellung von Fensterrahmen, Türrahmen, im Innenausbau oder in Vorrichtungen, bei denen im Betrieb Temperaturunterschiede zwischen Innenraum und Außenraum auftreten.

## Claims

1. A continuous process for the production of a profile composed of at least one core made of a polyurethane foam, of a jacket made of at least one thermoplastic material and optionally of at least one foil between core and jacket, composed of the following steps:
(A) optionally introduction of a foil into a gripper-belt system which has the shape of the profile,
(B) introduction, into the gripper-belt system, of at least one liquid, foamable reactive system of the core comprising isocyanate a) and at least one relatively high-molecular-weight compound b) having groups reactive toward isocyanate groups, in a manner such that any foil present encloses the precursor material at least to some extent,
(C) shaping of the core in the gripper-belt system,
(D) optionally cooling of the core from step (C),
(E)introduction of the core from step (C) or (D) into an extruder with attached extrusion die for the production of hollow profiles, in order to sheath the core with a jacket made of at least one thermoplastic material and thus obtain the profile,
(F) optionally cooling of the profile from step (E), and
(G) optionally cutting of the profile from step (E) or (F).

2. The process according to claim 1, wherein the at least one thermoplastic material is selected from the group composed of polyolefins, polycondensates, polyadducts, wood-plastics composites, and mixtures thereof.

3. The process according to claim 1 or 2 wherein, in step (A), (B), and/or (E), reinforcement is introduced into the gripper-belt system or, respectively, into the extrusion die of the extruder in a manner such that said reinforcement is present in the profile between core and jacket.

4. A profile produced via the process according to any of claims 1 to 3, wherein
• the profile is composed of a core made of a polyurethane foam, of a jacket made of polyvinyl chloride, and of a foil between core and jacket,
• the foil encloses the core at least to some extent, preferable completely, and
• the foil comprises a thermoplastic polyurethane or Teflon.

5. The use of the profile according to claim 4 for the production of window frames or door frames, or in the fitting-out of interiors, or in apparatuses in which, during operative use, temperature differences arise between interior space and exterior space.

## Revendications

1. Procédé en continu pour la préparation d'un profilé constitué d'au moins un noyau composé d'une mousse de polyuréthane, d'une enveloppe composée d'au moins un matériau thermoplastique et éventuellement d'au moins une feuille entre le noyau et l'enveloppe, constitué par les étapes suivantes
(A) éventuellement, introduction d'une feuille dans un convoyeur à mâchoires, qui présente la forme du profilé,
(B) introduction d'au moins un système réactif liquide, moussable, du noyau contenant au moins un polyisocyanate a) et au moins un composé à plus haut poids moléculaire comportant des groupes b) réactifs envers des groupes isocyanate, dans le convoyeur à mâchoires, de sorte qu'une feuille éventuellement présente enveloppe au moins partiellement le matériau précurseur,
(C) façonnage du noyau dans le convoyeur à mâchoires,
(D) éventuellement refroidissement du noyau de l'étape (C),
(E) introduction du noyau de l'étape (C) ou (D) dans une extrudeuse comportant une buse d'extrusion raccordée pour la préparation de profilés creux, afin d'envelopper le noyau avec une enveloppe composée d'au moins un matériau thermoplastique, afin d'obtenir le profilé,
(F) éventuellement refroidissement du profilé de l'étape (E) et
(G) éventuellement découpe du profilé de l'étape (E) ou (F).

2. Procédé selon la revendication 1, **caractérisé en ce que** l'au moins un matériau thermoplastique est choisi dans le groupe constitué par des polyoléfines, des polycondensats, des produits de polyaddition, des composites bois-plastique et des mélanges correspondants.

3. Procédé selon la revendication 1 ou 2, **caractérisé en ce que** dans l'étape (A), (B) et/ou (E) une armature est introduite dans le convoyeur à mâchoires, respectivement dans la buse d'extrusion de l'extrudeuse, de sorte que cette armature soit présente dans le profilé entre le noyau et l'enveloppe.

4. Profilé, préparé par le procédé selon l'une quelconque des revendications 1 à 3, **caractérisé en ce que**
• le profilé est constitué d'un noyau composé d'une mousse de polyuréthane, d'une enveloppe de poly(chlorure de vinyle) et d'une feuille entre le noyau et l'enveloppe,
• la feuille entoure au moins partiellement, préférablement totalement le noyau, et
• la feuille contient un polyuréthane thermoplastique ou du téflon.

5. Utilisation du profilé selon la revendication 4 pour la préparation de cadres de fenêtres, de cadres de portes, dans l'aménagement intérieur ou dans des dispositifs dans lesquels, en fonctionnement, des différences de température surviennent entre l'espace intérieur et l'espace extérieur.
